# DEMANDE DE BREVET EUROPEEN

(11) **EP 1 707 427 A1**
(43) Date de publication de la demande: **04.10.2006**
(21) Numéro de dépôt: 06006358.3
(22) Date de dépôt: 28.03.2006
(51) Int. Cl.: B60L 5/20

(54) **Pantographe de machine de traction ferroviaire et capteur pour le contrôle de la qualité de captage du courant par le pantographe**

(30) Priorité: 29.03.2005 FR 0550804
(71) Demandeur: Société Nationale des Chemins de Fer Français, 75014 Paris (FR); Direction Juridique SNCF, 75436 Paris Codex 09 (FR)
(72) Inventeur: Guegan, Alexis, 94407 Vitry Sur Seine Cedex (FR); Servolle, Nicolas, 94407 Vitry Sur Seine Cedex (FR)
(74) Mandataire: Bloch, Gérard

(57) **Abrégé**

Le pantographe comprend
- un cadre (2) supportant au moins un archet (3) par deux suspensions d'archet (4), l'archet (3) évoluant dans un plan vertical (V) passant par les deux suspensions d'archet (4) quand le cadre (2) se déploie ou se reploie,
- et au moins un capteur (10) de force (F) dans la chaîne mécanique qui supporte l'archet (3).

Le capteur comprend deux extrémités et au moins une zone d'épreuve comprenant au moins une jauge extensomètre, la zone d'épreuve étant située entre les deux extrémités qui comportent des moyens de fixation (17) et (18) disposés tête-bêche.

## Description

L'invention concerne les contrôles de qualité du captage, par un pantographe de machine de traction ferroviaire, du courant électrique circulant sur une caténaire.

Un pantographe est un appareil installé sur le toit d'une motrice électrique pour transmettre le courant électrique à ses organes moteurs. Il est composé généralement d'un cadre, articulé autour de pivots pour se déployer ou se replier, et d'une tête supportant un ou deux archets à une ou deux crosses, par d'autres pivots ou des suspensions appelées suspensions d'archet.

Quand, sous l'action conjuguée de vérins pneumatiques et de ressorts amortisseurs, le cadre articulé est déployé, la tête s'élève contre la caténaire et y est maintenue avec une force de contact, par exemple environ soixante dix Newtons. La motrice avançant, l'archet glisse et reste en contact contre la caténaire.

Mais aux grandes vitesses, la force de contact, relativement faible, est insuffisante pour empêcher des ruptures de contact entre les crosses et la caténaire, ce qui provoque des arcs électriques et des fluctuations de l'intensité du courant transmis aux moteurs. De ces fluctuations dépend la qualité de captage du courant électrique. Par ailleurs, une force de contact pantographe-caténaire trop forte peut conduire à des soulèvements trop important du fil de contact avec risque de détérioration de la caténaire et des supports.

Il existe de nombreuses méthodes pour contrôler la qualité du captage du courant.

On peut bien sûr mesurer directement les fluctuations de l'intensité du courant.

On peut alternativement procéder à la mesure de la fréquence des arcs électriques intervenant lors des ruptures de contact ou effectuer des mesures de la puissance dissipée par ces mêmes arcs électriques.

Mais on peut aussi mesurer en temps réel la force de contact instantanée avec laquelle l'archet reste appliqué contre la caténaire.

L'invention concerne plus particulièrement un capteur permettant d'utiliser cette dernière méthode, de contrôle de la qualité du captage du courant, par la mesure de la force de contact.

Devant servir d'outil d'homologation lors de la réception des pantographes par la demanderesse, le capteur de force doit répondre à des spécifications bien précises touchant ses performances aussi bien de mesure que de résistance à l'environnement très sévère dans lequel il doit fonctionner. Ces spécifications sont détaillées dans la norme européenne NF EN 50317.

Le capteur comporte des jauges de contrainte solidaires d'une pièce d'épreuve, laquelle est insérée dans la chaîne mécanique support du pantographe et est située à proximité de l'archet, de façon à ce que les mesures ne soient pas affectées par la partie de la chaîne séparant la pièce d'épreuve de l'archet, par exemple par la présence de ressorts amortisseurs, notamment ceux pouvant être prévus dans les suspensions d'archet.

A proximité de la caténaire, le capteur est soumis aux effets électromagnétiques induits par les forts courants qui y circulent et par l'apparition d'arcs électriques. Aussi est-il prémuni contre ces effets par des filtrages électriques et des isolements galvaniques prévus sur les circuits électriques de mesure.

Surtout, son montage, nécessairement aérien, implique naturellement de respecter un profil aérodynamique de la pièce d'épreuve. Notamment, sa présence sur le pantographe ne doit pas induire de modification de la force de contact supérieure à 5% de sa valeur nominale, ceci jusqu'à des vitesses pouvant atteindre 350 km/heure.

Il existe déjà des capteurs de ce type pour certaines technologies de pantographes.

Une solution consiste à substituer des pivots spécifiques comportant une pièce d'épreuve aux pivots ordinaires. Elle n'est possible que s'il y a des pivots entre l'archet et la tête du pantographe. Le capteur se confond ainsi avec le pivot, ce qui permet d'éviter une quelconque modification du comportement aérodynamique du pantographe.

Mais cette solution ne convient qu'à une technologie particulière de pantographe.

Pour des technologies dans lesquelles les pivots les plus proches des archets sont trop éloignés, cette solution ne convient pas. En substitution, il faudrait insérer la pièce d'épreuve à la place d'un des pivots supportant l'archet, ce qui n'est pas possible sans changer le plan vertical de mobilité dans lequel l'archet évolue relativement au cadre du pantographe, donc sans changer la force de contact.

La demanderesse a cherché à résoudre ce problème et a trouvé le moyen de réaliser des mesures de force de contact d'un pantographe sur une caténaire quelle que soit la technologie du pantographe.

A cet effet, l'invention concerne un pantographe comprenant
- un cadre supportant au moins un archet par deux suspensions d'archet, l'archet évoluant dans un plan vertical passant par les deux suspensions d'archet quand le cadre se déploie ou se reploie,
- et au moins un capteur de force dans la chaîne mécanique qui supporte l'archet,
caractérisé par le fait que le capteur de force est monté sur une suspension d'archet et que l'archet est monté sensiblement dans ledit plan vertical en porte à faux sur le capteur par rapport à cette suspension.

Le plan vertical de mobilité de l'archet ne change pas de position relativement au cadre du pantographe, que le capteur soit présent ou non, puisque ce dernier est situé entièrement dans ce plan.

L'invention concerne aussi un capteur pour le contrôle de la qualité de captage du courant par le pantographe ci-dessus, comprenant deux extrémités, et au moins une zone d'épreuve comprenant au moins une jauge extensomètre, la zone d'épreuve étant située entre les deux extrémités, le capteur étant caractérisé par le fait que lesdites extrémités comportent des moyens de fixation disposés tête-bêche.

Cette disposition permet de minimiser l'écart en hauteur entre les positions de l'archet quand le capteur est monté et quand il ne l'est pas.

Le capteur s'étend complètement en travers de la marche de la motrice, ce qui va à l'inverse de l'implication naturelle à respecter un montage aérodynamique. Malgré cela, la force de contact n'est pas modifiée au delà des spécifications d'homologation.

L'invention sera mieux comprise à l'aide de la description suivante du pantographe et du capteur de force de l'invention, en référence au dessin annexé, sur lequel :
- la figure 1 est une vue perspective d'un pantographe de l'art antérieur ;
- la figure 2 est un schéma fonctionnel du pantographe de la figure 1 ;
- la figure 3 représente une vue en perspective éclatée d'une partie de la tête du pantographe de l'invention, et de ses deux archets, munis chacun d'un capteur de force de contact selon l'invention ;
- la figure 4 est une vue en perspective du capteur de force selon l'invention, montrant sa fixation sur l'archet et
- la figure 5 est une vue en perspective du capteur de la figure 4, montrant sa fixation sur sa suspension.

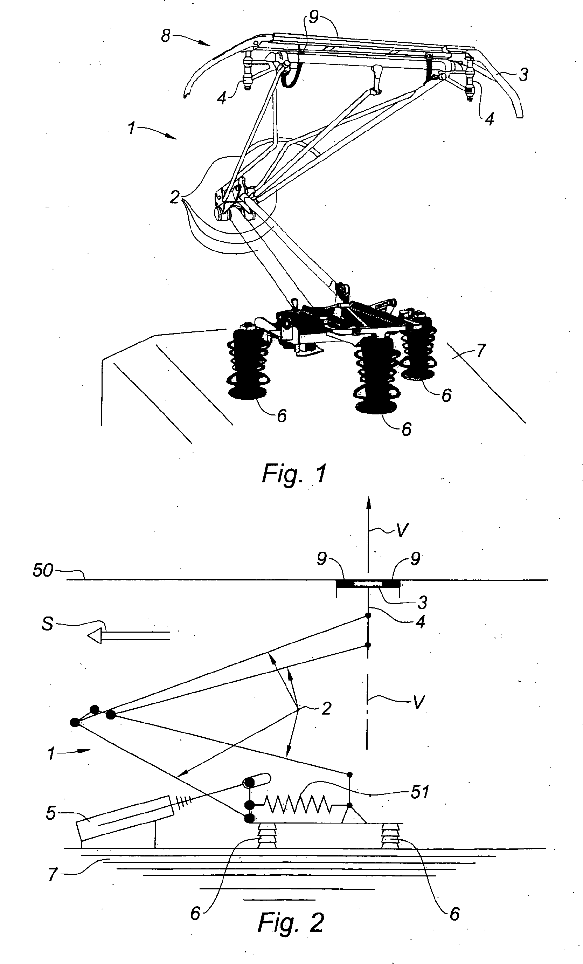

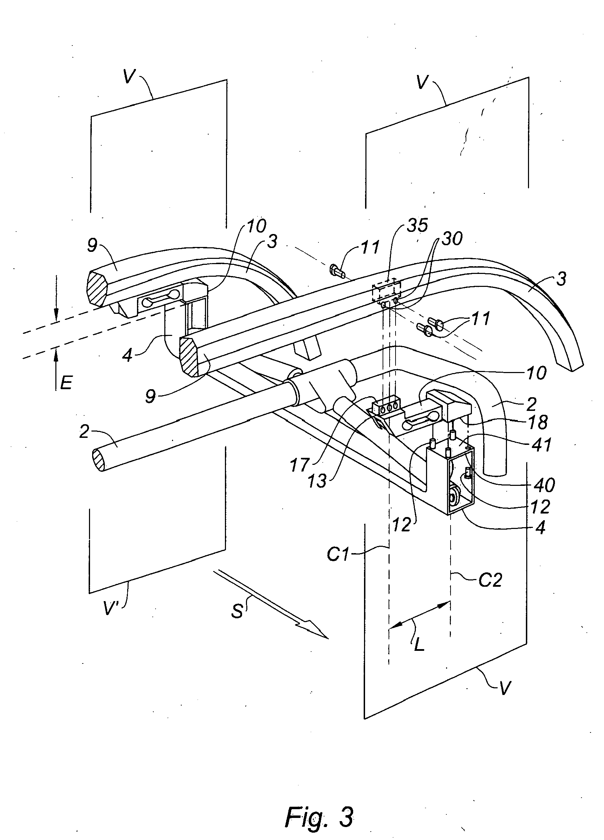

En référence à la figure 1, un pantographe 1 comporte un cadre 2 articulé monté sur des pieds isolateurs 6, ici au nombre de trois, solidaires du toit 7 d'une motrice (non représentée), et une tête 8 comportant ici un seul archet 3 avec ses bandes de frottement 9 et supporté par la partie supérieure du cadre 2 au moyen de deux suspensions d'archet 4. On soulignera ici que le terme suspension ne doit pas être considéré dans un sens trop restrictif, dans un sens qu'on peut parfois aborder quand on veut parler d'amortissement. Dans le cas d'espèce, il doit être clair que la suspension dont il s'agit est un moyen support de l'archet. Si ce terme a été quand même employé à cet endroit, c'est que ce moyen support est intégré à un ensemble qui, lui, comporte effectivement des moyens ressorts ou d'amortissement, moyens visibles sur la figure 3 mais qui n'ont pas à intervenir dans la compréhension de l'invention.

Pour que la motrice se déplace, selon une direction S en référence à la figure 2, un mécanisme de commande 5 commande le déploiement du cadre articulé 2 de sorte que les suspensions 4 appliquent le ou les barres de frottement 9 des archets 3 contre un fil de contact 50 de la caténaire qui distribue le courant électrique à la motrice.

La force de contact F est assurée par des ressorts de travail 51 à proximité des pieds isolateurs 6 et éventuellement des ressorts (non représentés) dans les suspensions d'archet 4 et s'exerce dans un plan vertical V, si bien que, lors du déplacement de la motrice, les archets 3 ou les barres de frottement 9 évoluent en déploiement ou en reploiement dans un plan vertical V fixe par rapport à la motrice, et constamment perpendiculaire au fil 50.

Pour mesurer la force F en permanence, on insère des capteurs de force 10 dans la chaîne mécanique support constituée par le cadre 2, lés suspensions d'archets 4 et les archets 3, comme il est montré en détail sur la figure 3, et comme décrit plus loin. Dans l'exemple de la figure 3, il y a deux archets visibles seulement par leurs parties situées d'un seul côté du toit 7 de la motrice, et deux capteurs 10, évoluant respectivement dans deux plans verticaux V. Par la suite, on ne considérera que l'un de ces plans V et les éléments du pantographe qui y sont associés.

Un capteur 10 est une pièce d'épreuve munie de jauges extensomètres de la manière qui sera montrée plus loin et qui, sous la contrainte de la force F, mesurent leurs déformations. Les signaux électriques qui en résultent sont ensuite traités pour calculer la force F en fonction de ces déformations, selon une technique bien connue, permettant notamment d'éliminer les signaux résultant de contraintes autres que celles liées à F. Un capteur 10 est ici plus précisément inséré entre l'archet 3 et la suspension 4.

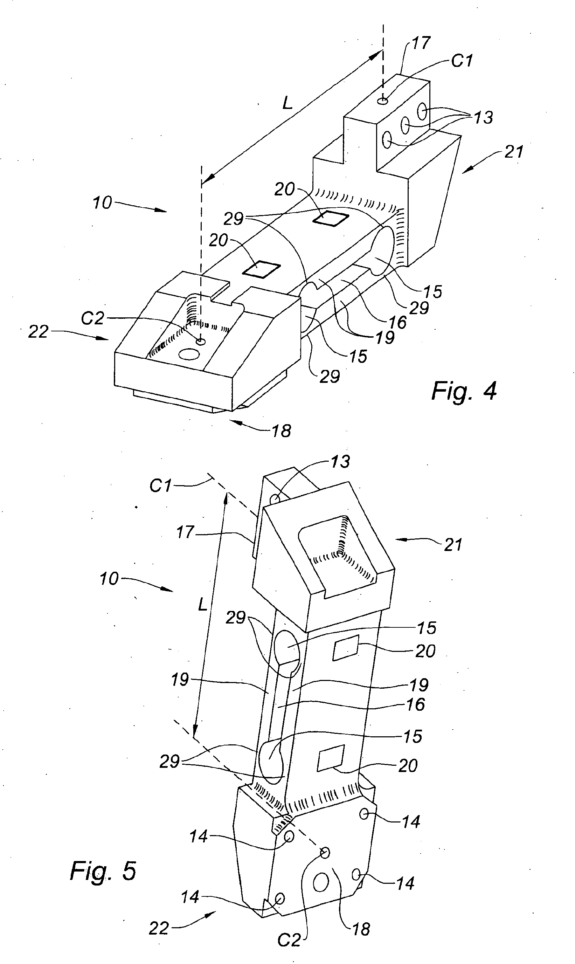

Chaque capteur 10 se présente sous une forme allongée sensiblement parallélépipédique et ayant deux extrémités 21 et 22 en forme de sabot, à section globalement trapézoïdale, comme on peut voir sur les figures 4 et 5. Ces sabots d'extrémité 21 et 22 sont agencés pour être fixés l'un 21 vers le haut à l'archet 3 et l'autre 22 vers le bas à la suspension d'archet 4 par des moyens de fixation, ainsi disposés tête-bêche, de façon à minimiser l'écart E de position en hauteur de l'archet 3 quand le capteur 10 est monté (figure 3). Les deux sabots d'extrémité sont réunis par un bras 50 à deux poutres d'épreuve 19.

Le sabot d'extrémité 21 comporte un tenon 17 perpendiculairement en saillie hors de la surface d'appui 18, constituant la base du sabot, et percé de trois trous taraudés 13. Son extrémité 22, elle, comporte une surface d'appui 18 plane percée de quatre trous taraudés 14.

La suspension d'archet 4 présente une surface d'appui plane 41 agencée pour recevoir la surface d'appui 18 du capteur 10. Cette surface 41 est également percée de quatre trous traversants 40. De même, l'archet 3 comporte une gorge 35 agencée pour recevoir le tenon 17, et il est percé de trois trous 30 (deux seulement sont représentés) débouchant dans cette gorge 35 et situés de façon à pouvoir être mis en face des trous 13 quand on y insère le tenon 17.

Le capteur 10 est fixé à la suspension 4 par quatre vis 12 traversant les quatre trous 40 de la surface 41 et se vissant dans les quatre trous taraudés correspondants 14 de la surface 18 du sabot d'extrémité 22. Quand le capteur 10 est fixé sur la suspension 4, la surface 18 est horizontale, de sorte que la fixation est réalisée selon un axe vertical C2 perpendiculaire à la surface 18.

Un capteur 10 est fixé à l'archet 3 par trois vis 11 passées au travers des trous 30 débouchant dans la gorge 35 et se vissant dans les trois trous taraudés 13 de son tenon de fixation 17, de sorte que la fixation est réalisée selon un axe vertical C1 perpendiculaire à la surface 18.

Les fixations sont telles que les axes C1 et C2 de fixation des sabots d'extrémité 21 et 22 du capteur 10 sont sensiblement verticaux et situés dans le même plan vertical V que celui dans lequel l'archet 3 et les suspensions 4 évoluent, et y sont espacés l'un de l'autre d'une distance L.

Etant donné les positions relatives des axes C1 et C2, par sa gorge 35, l'archet 3 est monté, par le capteur 10, en porte à faux, dans le plan vertical V, par rapport à la surface 41 de la suspension 4. Le porte à faux correspond à la longueur L.

Il faut remarquer que tous autres moyens de fixation connus sont également possible, pourvu qu'ils rendent suffisamment solidaires entre eux le capteur 10, l'archet 3 et sa suspension 4 et qu'ils permettent la mise en oeuvre du porte à faux L.

D'autre part, les deux poutres 19 du bras 50 d'un capteur 10 ménagent entre elles une ouverture longitudinale parallélépipédique 16 à faces internes parallèles à la surface d'appui 18, c'est-à-dire horizontales quand le capteur 10 est fixé sur la suspension 4. Cette ouverture 16 se termine, à proximité des deux sabots 21 et 22, par des alésages cylindriques horizontaux 15.

Les alésages 15 sont tels que les poutres 19 présentent des zones 29 amincies particulièrement adaptées pour subir les déformations servant à mesurer la force F. Elles encaissent en effet directement le poids de l'archet et la force de contact F. Les jauges 20, ici au nombre de quatre, sont rapportées, de façon symétrique, sur ces zones amincies 29, à l'extérieur des poutres.

On notera que chaque capteur 10 présente une résistance aérodynamique la plus grande dans le plan V. Bien que ce dernier soit perpendiculaire au sens de la marche S, la résistance aérodynamique supplémentaire induite par chaque capteur s'avère cependant négligeable.

Mais que les capteurs 10 soient ou ne soient pas en place, les archets 3 se déploient et se reploient toujours dans les mêmes plans V, ce qui permet de maintenir la force de contact sensiblement à une même intensité, puisque le couple imprimé sous l'action conjuguée du mécanisme de commande 5 et des ressorts de travail 51 reste identique.

## Revendications

1. - Pantographe (1) de machine de traction ferroviaire pour le captage du courant sur une caténaire (50), comprenant
- un cadre (2) supportant au moins un archet (3) par deux suspensions d'archet (4), l'archet (3) évoluant dans un plan vertical (V) passant par les deux suspensions d'archet (4) quand le cadre (2) se déploie ou se reploie,
- et au moins un capteur (10) de force (F) dans la chaîne mécanique qui supporte l'archet (3),
**caractérisé par le fait que** le capteur (10) est monté sur une suspension d'archet (4) et que l'archet (3) est monté sensiblement dans ce plan vertical (V) en porte à faux (L) sur le capteur (10) par rapport à cette suspension (4).

2. - Pantographe selon la revendication 1, dans lequel le capteur (10) est inséré entre l'archet (3) et la suspension (4).

3. - Pantographe selon l'une des revendications 1 et 2, dans lequel la suspension (4) et l'archet (3) sont fixés au capteur (10) sensiblement dans le plan vertical d'évolution de l'archet et de la suspension.

4. - Pantographe selon l'une des revendications 1 à 3, dans lequel les moyens de fixation (35) de l'archet (3) comportent une gorge (35).

5. - Pantographe selon l'une des revendications 3 et 4, dans lequel les moyens de fixation de l'archet (35) et les moyens de fixation de la suspension (41) sont distants entre eux d'une longueur (L) faisant office de porte à faux.

6. - Pantographe selon la revendication 5, dans lequel la plus grande longueur du capteur s'étend en travers du sens de la marche de la machine de traction ferroviaire.

7. - Capteur (10) pour le contrôle de la qualité de captage du courant par un pantographe (1) sur une caténaire (50), comprenant deux extrémités (21, 22) et au moins une zone d'épreuve (50) comprenant au moins une jauge extensomètre (20), la zone d'épreuve (50) étant située entre les deux extrémités (21) et (22), le capteur (10) étant **caractérisé par le fait que** lesdites extrémités (21) et (22) comportent des moyens de fixation (17) et (18) disposés tête-bêche.

8. - Capteur selon la revendication 7, dans lequel une première extrémité de fixation (21) comporte un téton (17) de fixation à un archet de pantographe et la seconde extrémité de fixation (22) comporte une surface d'appui (18) de fixation à une suspension d'archet.

9. - Capteur selon la revendication 8 dans lequel le téton de fixation (17) est percé de trous (13) et la surface d'appui (18) est percée de trous (14).

10. - Capteur selon la revendication 9, dans lequel les trous (13) et/ou (14) sont taraudés.

11. - Capteur selon l'une des revendications 7 à 10, comportant une ouverture (16) parallélépipédique s'étendant entre deux poutres d'épreuve (19) d'une extrémité (21) à l'autre (22) et se terminant par des alésages cylindriques (15).

12. - Capteur selon la revendication 9, dans lequel les alésages (15) déterminent des zones amincies (29) des poutres d'épreuve (19) sur lesquelles sont rapportées des jauges extensomètres (20).
